# EUROPÄISCHE PATENTANMELDUNG

(11) **EP 2 604 475 A2**
(43) Veröffentlichungstag der Anmeldung: **19.06.2013**
(21) Anmeldenummer: 12001765.2
(22) Anmeldetag: 15.03.2012
(51) Int. Cl.: B60R 13/02

(54) **Dachhimmel mit umgeformter umlaufender Oberkante**

(30) Priorität: 16.12.2011 DE 102011121178
(71) Anmelder: Johnson Controls Headliner GmbH, 66802 Uberherrn (DE)
(72) Erfinder: Mailänder, Ralf, 9357 Bettendorf (LU)
(74) Vertreter: Wolff, Felix

(57) **Zusammenfassung**

Die vorliegende Erfindung betrifft einen Dachhimmel mit einer Ausnehmung sowie ein Verfahren zur Herstellung des Dachhimmels und ein Verfahren zur Befestigung eines Dachhimmels an einer Schiebedachkassette.

## Beschreibung

Die vorliegende Erfindung betrifft einen Dachhimmel mit einer Ausnehmung sowie ein Verfahren zur Herstellung des Dachhimmels und ein Verfahren zur Befestigung eines Dachhimmels an einer Schiebedachkassette.

Dachhimmel als Innenverkleidungsteile von Fahrzeugdächern werden für jedes Fahrzeug in verschiedenen Varianten hergestellt. Neben dem sogenannten Volldach- oder Normaldachhimmel, der die komplett darüber liegende Dachinnenseite vollständig verkleidet, existieren auch Varianten mit einem oder mehreren Dachöffnungen. Diese z. B. mit Schiebe- oder Panoramadach angebotenen Varianten müssen im Verbindungsbereich zur Karosserie zu der in der Regel zwischen Formhimmel und Dachaußenfläche befindlichen Kassette, beispielsweise Schiebedachkassette, einen ästhetischen Abschluss bilden und fest mit dieser Einheit verbunden sein. Dabei ist es die Bestrebung des Fachmanns, diese Verbindung möglichst einfach und möglichst haltbar zu gestalten.

Es war deshalb die Aufgabe der vorliegenden Erfindung einen Dachhimmel zur Verfügung zu stellen, der einfach herzustellen und zu montieren ist und fest mit einer Kassette, insbesondere Schiebedachkassette, verbindbar ist.

Gelöst wird die Aufgabe mit einem Dachhimmel, der im Bereich einer Dachöffnung einen Rand aufweist, der umlaufend mit einer höher gezogenen Ausformung und daran anschließend mit einem Umbug versehen ist, wobei in dem Umbug eine Ausnehmung oder ein Form- und/oder Kraftschlussmittel vorgesehen ist.

Die zu diesem Gegenstand der vorliegenden Erfindung gemachten Ausführungen gelten für die anderen Gegenstände der vorliegenden Erfindung gleichermaßen und umgekehrt.

Die vorliegende Erfindung betrifft einen Dachhimmel. Dieser besteht vorzugsweise aus einem Trägermaterial und besonders bevorzugt zusätzlich aus einem Dekormaterial. Erfindungsgemäß ist der Dachhimmel in seinem Randbereich mit einer höher gezogenen, d.h. vom Innenraum des Fahrzeuges weg gerichteten, Ausformung versehen. An diese Ausformung schließt sich ein Umbug an. Dieser Umbug kann einen beliebigen Winkel zu der höher gezogenen Ausformung aufweisen. Vorzugsweise ist der Umbug jedoch in einem Winkel zwischen 80° und 180° zu der höher gezogenen Ausformung vorgesehen. Ganz besonders bevorzugt beträgt der Winkel 90° oder 180°.

Gemäß einer Ausführungsform der vorliegenden Erfindung weist der Dachhimmel in dem Umbug eine Ausnehmung auf. Alternativ oder zusätzlich ist in dem Umbug ein Form- und/oder Kraftschlussmittel vorgesehen.

Vorzugsweise ist der erfindungsgemäße Dachhimmel mit einer Kassette, insbesondere einer Schiebedachkassette, die mindestens eine Ausnehmung aufweist, an der Karosserie eines Fahrzeuges, besonders bevorzugt lösbar, angebracht.

Vorzugsweise wird durch die Ausnehmung in dem Dachhimmel und durch die Ausnehmung in der Kassette ein Befestigungsmittel gesteckt, das den Dachhimmel und die Kassette, vorzugsweise lösbar, miteinander verbindet. Vorzugsweise weist mindestens eine Ausnehmung im Vergleich zu dem Befestigungsmittel ein gewisses Übermaß auf, um Fertigungstoleranzen auszugleichen. Vorzugsweise ist an dem Befestigungsmittel ein Rastmittel vorgesehen, das insbesondere rastend mit dem Dachhimmel zusammenwirkt. Das Befestigungsmittel wird vorzugsweise so vorgesehen, dass es zumindest teilweise den Dachhimmel verdeckt.

Gemäß einer anderen bevorzugten Ausführungsform weist der Umbug ein Form- und/oder Kraftschlussmittel, insbesondere einstückig, auf, das mit der Ausnehmung in der Schiebedachkassette zusammenwirkt. Vorzugsweise wirkt das Form- und/oder Kraftschlussmittel rastend mit der Ausnehmung zusammen. Vorzugsweise ist das Form- und/oder Kraftschlussmittel eine Ausformung, die vorzugsweise in den Dachhimmel eingeformt ist.

Ein weiterer bevorzugter oder erfindungsgemäßer Gegenstand der vorliegenden Erfindung ist ein Dachhimmel, der im Bereich einer Dachöffnung einen Rand aufweist, der umlaufend mit einer höher gezogenen Ausformung und daran anschließend mit einem Umbug, beispielsweis einem Flansch, versehen ist und der eine Kassette aufweist, die zumindest abschnittsweise eine Auflage, insbesondere eine Auflagelasche, aufweist, auf der der Umbug des Dachhimmels aufliegt, wobei die Auflage mit der Kassette einen Schlitz bildet, der den Umbug des Dachhimmels zumindest abschnittsweise aufnimmt.

Die zu diesem Gegenstand der vorliegenden Erfindung gemachten Ausführungen gelten für die anderen Gegenstände der vorliegenden Erfindung gleichermaßen und umgekehrt.

Dieser erfindungsgemäße oder bevorzugte Gegenstand der vorliegenden Erfindung betrifft ein System aus einem Dachhimmel und einer Kassette. Der Dachhimmel besteht vorzugsweise aus einem Trägermaterial und besonders bevorzugt zusätzlich aus einem Dekormaterial. Erfindungsgemäß weist der Dachhimmel eine Ausnehmung, beispielsweise eine Dachöffnung, auf, in deren Randbereich er mit einer höher gezogenen, d. h. vom Innenraum des Fahrzeuges weg gerichteten, Ausformung versehen ist. An diese Ausformung schließt sich ein Umbug an. Dieser Umbug kann einen beliebigen Winkel zu der höher gezogenen Ausformung aufweisen. Vorzugsweise ist der Umbug jedoch in einem Winkel zwischen 80° und 180° zu der höher gezogenen Ausformung vorgesehen. Ganz besonders bevorzugt beträgt der Winkel 90° oder 180°. Der Umbug kann sich über den gesamten Umfang der Dachöffnung erstrecken oder nur abschnittsweise vorgesehen sein.

Gemäß einer bevorzugten Ausführungsform der vorliegenden Erfindung weist der Dachhimmel in dem Umbug eine oder mehrere Ausnehmung auf, die vorzugsweise jeweils einen Vorsprung, der an der Kassette und/oder der Auflage vorgesehen ist, aufnehmen. Alternativ oder zusätzlich sind an dem Umbug ein oder mehrere Form- und/oder Kraftschlussmittel vorgesehen.

Vorzugsweise ist der Dachhimmel mit einer Kassette, insbesondere einer Schiebedachkassette, an der Karosserie eines Fahrzeuges, besonders bevorzugt lösbar, angebracht. Vorzugsweise ist nun vorgesehen, dass die Kassette eine Auflage, insbesondere eine Auflagelasche aufweist, auf der der Dachhimmel aufliegt. Diese Auflage kann sich über den gesamten inneren Umfang der Kassette oder nur abschnittsweise erstrecken. Vorzugsweise ist die Auflage auf zwei gegenüberliegenden Seiten einer im Wesentlichen rechteckförmigen Kassette vorgesehen. Die Auflage kann eine oder mehrere Ausnehmung(en), Einbuchtung(en) und/oder Ausbuchtung(en) aufweisen, die jeweils form- und/oder kraftschlüssig mit dem Umbug des Dachhimmels zusammenwirken.

Vorzugsweise ist die Auflage mit der Kassette einstückig vorgesehen. Beispielweise wird die Kassette strangextrudiert, wobei die Auflage an die Kassette angeformt ist.

Weiterhin bevorzugt bilden die Kassette und die Auflage einen Schlitz, der den Umbug des Dachhimmels zumindest abschnittsweise aufnimmt. Die Breite dieses Schlitzes kann größer, gleich oder kleiner ausgelegt sein als die Dicke des Umbugs. Im letzten Fall ist der Umbug dann in dem Schlitz geklemmt. Die Breite des Schlitzes kann sich insbesondere in Einführrichtung des Umbugs des Dachhimmels verändern. Beispielsweise ist die Breite des Schlitzes anfänglich größer vorgesehen, um das Einführen des Umbugs in den Schlitz zu erleichtern, und vermindert sich dann, beispielweise um den Umbug beim weiteren Einführen in den Schlitz zu klemmen oder das Spiel zwischen Schlitz und Umbug zu vermindern. Es ist jedoch auch möglich, dass sich der Schlitz in Einsteckrichtung erweitert. Vorzugsweise wird der Eingang beim Einstecken des Umbugs, insbesondere elastisch, aufgeweitet.

Gemäß einer anderen bevorzugten Ausführungsform weist der Umbug ein Form- und/oder Kraftschlussmittel, insbesondere einstückig, auf, das mit einer Ausnehmung in der Kassette, insbesondere der Schiebedachkassette, oder der Auflage zusammenwirkt. Vorzugsweise wirkt das Form- und/oder Kraftschlussmittel rastend mit der Ausnehmung zusammen. Vorzugsweise ist das Form- und/oder Kraftschlussmittel eine Ausformung, die vorzugsweise in den Dachhimmel eingeformt ist.

Ein weiterer Gegenstand der vorliegenden Erfindung ist ein Verfahren zur Herstellung eines Dachhimmels, bei dem im Bereich des Randes einer Ausnehmung des Dachhimmels umlaufend eine höher gezogene Ausformung und daran anschließend ein Umbug durch Umformen vorgesehen wird, wobei in den Umbug ein Form- und/oder Kraftschlussmittel eingeformt wird.

Die zu diesem Gegenstand der vorliegenden Erfindung gemachten Ausführungen gelten für die anderen Gegenstände der vorliegenden Erfindung gleichermaßen und umgekehrt.

Vorzugsweise wird das Form- und/oder Kraftschlussmittel in den Dachhimmel eingeformt bevor der Umbug in seine abschließende Lage gebracht wird. Einformen im Sinne der Erfindung bedeutet, dass das Form- und/oder Kraftschlussmittel durch Umformen in einem Formpressprozess in das Material des Dachhimmels eingebracht wird und/oder das eine Gieß- und/oder Spritzform das Negativ des Form- und/oder Kraftschlussmittels aufweist.

Besonders bevorzugt wird Umbug beschnitten, bevor er in seine abschließende Lage gebracht wird.

Der Umbug kann mit der höher gezogenen Ausformung, beispielsweise stoffschlüssig, verbunden werden. Alternativ oder zusätzlich wird der Umbug durch plastische Verformung in seine abschließende Lage gebracht.

Die Verformung des Materials, aus dem der Dachhimmel gefertigt ist, erfolgt vorzugsweise unter Druck- und/oder Temperatureinfluss.

Vorzugsweise wird das Form- und/oder Kraftschlussmittel nur abschnittsweise im Bereich des Umbugs vorgesehen.

Ein weiterer bevorzugter oder erfindungsgemäßer Gegenstand der vorliegenden Erfindung ist ein Verfahren zur Herstellung eines Dachhimmels, bei dem im Bereich des Randes einer Ausnehmung des Dachhimmels umlaufend eine höher gezogene Ausformung und daran anschließend ein Umbug durch Umformen vorgesehen wird, wobei in den Umbug eine oder mehrere Ausnehmung(en) eingearbeitet wird/werden.

Die zu diesem Gegenstand der vorliegenden Erfindung gemachten Ausführungen gelten für die anderen Gegenstände der vorliegenden Erfindung gleichermaßen und umgekehrt.

Vorzugsweise wird die Ausnehmung eingearbeitet, beispielsweise durch Wasserstrahlbeschnitt oder durch Stanzen, bevor der Umbug in seine abschließende Lage gebracht wird. Besonders bevorzugt wird der Umbug beschnitten, bevor er in seine abschließende Lage gebracht wird.

Der Umbug kann mit der höher gezogenen Ausformung, beispielsweise stoffschlüssig, verbunden werden. Alternativ oder zusätzlich wird der Umbug durch plastische Verformung in seine abschließende Lage gebracht. Vorzugsweise liegt der Umbug nach der Verformung nicht oder nicht vollständig an der höher gezogenen Ausformung an und kann bei der Montage des Dachhimmels an der Kassette, insbesondere elastisch, in Richtung der höher gezogenen Ausformung gebogen werden. Dadurch entsteht eine Vorspannung, die einem selbsttätigen Lösen des Dachhimmels von der Kassette entgegenwirkt.

Die Verformung des Materials, aus dem der Dachhimmel gefertigt ist, erfolgt vorzugsweise unter Druck- und/oder Temperatureinfluss.

Vorzugsweise wird die Ausnehmung nur abschnittsweise im Bereich des Umbugs vorgesehen. Besonders bevorzugt weist der Umbug eine Mehrzahl von Ausnehmungen auf, die vorzugsweise zumindest teilweise äquidistant zueinander angeordnet sind.

Vorzugsweise weist der Umbug mindestens eine Einformung auf, die beispielsweise form- und/oder kraftschlüssig mit der Kassette und/oder der Auflage zusammenwirkt. Einformen im Sinne der Erfindung bedeutet, dass die Einformung durch Umformen in einem Formwerkzeug in das Material des Dachhimmels eingebracht wird und/oder dass eine Gieß- und/oder Spritzform das Negativ oder das Positiv des Form- und/oder Kraftschlussmittels aufweist.

Noch ein weiterer Gegenstand der vorliegenden Erfindung ist ein Verfahren zur Befestigung des Dachhimmels an einer Kassette, insbesondere einer Schiebedachkassette, bei dem der Umbug zumindest teilweise in die Kassette eingeführt wird und bei dem das Form- und/oder Kraftschlussmittel dabei in eine Ausnehmung der Kassette einrastet.

Die zu diesem Gegenstand der vorliegenden Erfindung gemachten Ausführungen gelten für die anderen Gegenstände der vorliegenden Erfindung gleichermaßen und umgekehrt.

Vorzugsweise verformt sich die Kassette und/oder der Dachhimmel, insbesondere der Umbug und/oder das Form- und/oder Kraftschlussmittel elastisch während der Einführung des Umbugs in die Kassette. Diese elastische Verformung bildet sich, vorzugsweise nur teilweise zurück, ganz besonders bevorzugt vollständig zurück, wenn das Form- und/oder Kraftschlussmittel an dem Umbug in die Ausnehmung einrastet.

Noch ein weiterer erfindungsgemäßer oder bevorzugter Gegenstand der vorliegenden Erfindung ist ein Verfahren zur Befestigung des Dachhimmels an einer Kassette, insbesondere einer Schiebedachkassette, bei dem der Umbug zumindest teilweise in die Kassette eingeführt wird und dabei der Umbug in den Schlitz zwischen Kassette und Auflage eindringt.

Die zu diesem Gegenstand der vorliegenden Erfindung gemachten Ausführungen gelten für die anderen Gegenstände der vorliegenden Erfindung gleichermaßen und umgekehrt.

Vorzugsweise verformt sich der Dachhimmel, insbesondere der Umbug, elastisch während der Einführung des Umbugs in die Kassette. Diese elastische Verformung bildet sich, vorzugsweise nur teilweise zurück, ganz besonders bevorzugt vollständig zurück, wenn der Umbug zumindest teilweise in den Schlitz eingedrungen ist. Vorzugsweise wird der Dachhimmel von unten in die Kassette eingeschoben, bis der Umbug oberhalb der Auflage angeordnet ist und danach wieder nach unten bewegt. Bei der Abwärtsbewegung dringt der Umbug dann weiter in den Schlitz zwischen Kassette und Auflage ein.

Der Fachmann versteht, dass bei allen Gegenständen der vorliegenden Erfindung das Trägermaterial des Dachhimmels ohne Dekormaterial geformt und/oder beschnitten werden und dann gegebenenfalls anschließend das Dekormaterial mit dem Trägermaterial, beispielsweise durch Kaschieren verbunden wird.

Im Folgenden werden die Erfindungen anhand der Figuren 1 - 12c erläutert. Diese Erläuterungen sind lediglich beispielhaft und schränken den allgemeinen Erfindungsgedanken nicht ein. Die Beschreibung gilt für alle Gegenstände der vorliegenden Erfindung gleichermaßen.
**Figuren 1 und 2** zeigen eine erste Ausführungsform des erfindungsgemäßen Dachhimmels.
**Figur 3** zeigt eine weitere Ausführungsform des erfindungsgemäßen Dachhimmels.
**Figur 4** zeigt die Herstellung des Dachhimmels gemäß Figur 3.
**Figuren 5** **und** **6** zeigen zwei Ausführungsformen der Wulst gemäß den Figuren 3 und 4.
**Figur 7** illustriert ein Herstellungsverfahren der Umformung gemäß den voranstehenden Figuren.
**Figur 8** zeigt eine weitere Ausführungsform des Herstellungsverfahrens der Umformung gemäß den voranstehenden Figuren.
**Figuren 9 und 10** zeigen ein System aus Dachhimmel und Kassette.
**Figuren 11a** **- c** zeigen die Herstellung des Dachhimmels.
**Figuren 12a** **- c** zeigen die Montage des Dachhimmels an der Dachkassette.

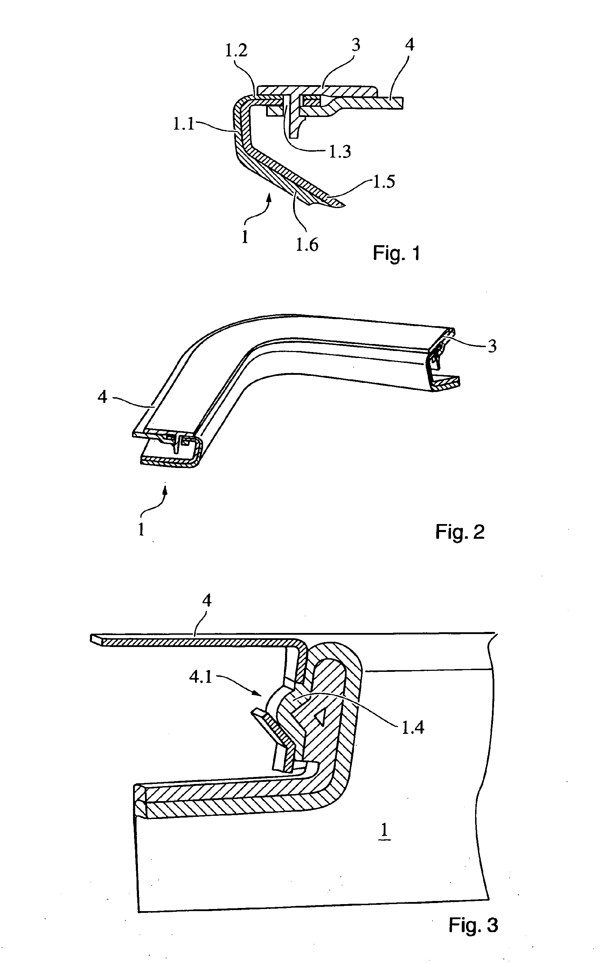

**Figur 1** zeigt eine erste Ausführungsform des Dachhimmels 1. Dieser besteht vorzugsweise aus einem Trägermaterial 1.5 und einem Dekormaterial 1.6, das dem Fahrgastinnenraum zugewandt ist. Der Dachhimmel 1 weist eine erste höher gezogene Ausformung 1.1 auf, an die sich ein Umbug 1.2 anschließt. Sowohl die Ausformung 1.1 als auch der Umbug 1.2 sind umlaufend um eine Ausnehmung, beispielsweise eine Schiebedachausnehmung, vorgesehen. Um den Dachhimmel 1.1 im Bereich beispielsweise eines Schiebedachs an einer Kassette 4, beispielsweise einer Schiebedachkassette, zu befestigen, weisen sowohl **die** Kassette 4 als auch der Dachhimmel 1 im Bereich des Umbugs eine Ausnehmung 1.3 auf, durch die ein Befestigungsmittel 3 durchführbar ist. Dadurch wird der Dachhimmel 1 fest mit der Kassette 4 verbunden. Vorzugsweise ist die Ausnehmung 1.3 und/oder die Ausnehmung in der Schiebedachkassette größer vorgesehen als das Befestigungsmittel. Vorzugsweise ist das Befestigungsmittel 3 rastend mit der Kassette 4 und/oder dem Dachhimmel vorgesehen, so dass es sich nicht selbsttätig löst.

**Figur 2** zeigt die Ausführungsform des Dachhimmels gemäß Figur 1. Es ist zu erkennen, dass das Befestigungsmittel 3 umlaufend um den gesamten Umbug 1.2 vorgesehen ist, wobei die Rastmittel vorzugsweise nur abschnittsweise vorgesehen sind.

**Figur 3** zeigt eine weitere Ausführungsform des erfindungsgemäßen Dachhimmels. In dem vorliegenden Fall wird der Dachhimmel 1 an der Kassette 4 durch ein Form- und/oder Kraftschlussmittel 1.4, hier eine Wulst befestigt, die sich in eine Ausnehmung 4.1 in der Schiebedachkassette erstreckt und form- und/oder kraftschlüssig und/oder rastend mit dieser zusammenwirkt. Dadurch ist sichergestellt, dass sich der Dachhimmel 1 nicht selbsttätig von der Schiebedachkassette 4 löst. Vorzugsweise weist die Schiebedachkassette eine Vielzahl von Ausnehmungen 4.1 auf, wobei vorzugsweise pro Ausnehmung 4.1 ein Mittel 1.4 vorgesehen ist.

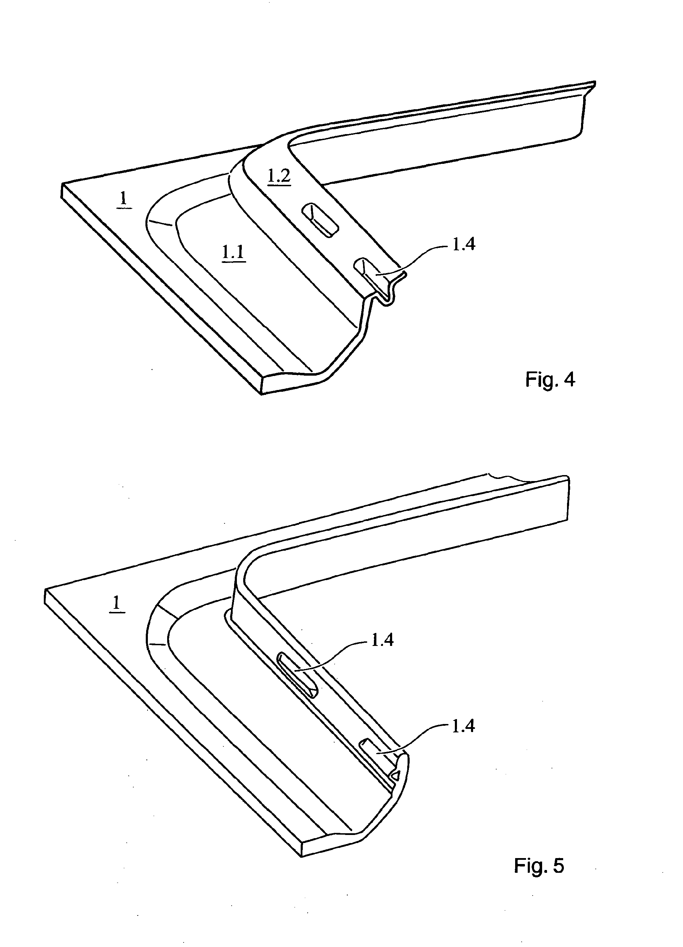

**Figur 4** zeigt den Dachhimmel vor dessen Umbug. In dieser Darstellung ist die Umbugfläche 1.2 insbesondere die Wulstfläche 1.4 noch nicht parallel zu der Ausformung 1.1 angeordnet, kann aber in diese Konfiguration umgebugt werden.

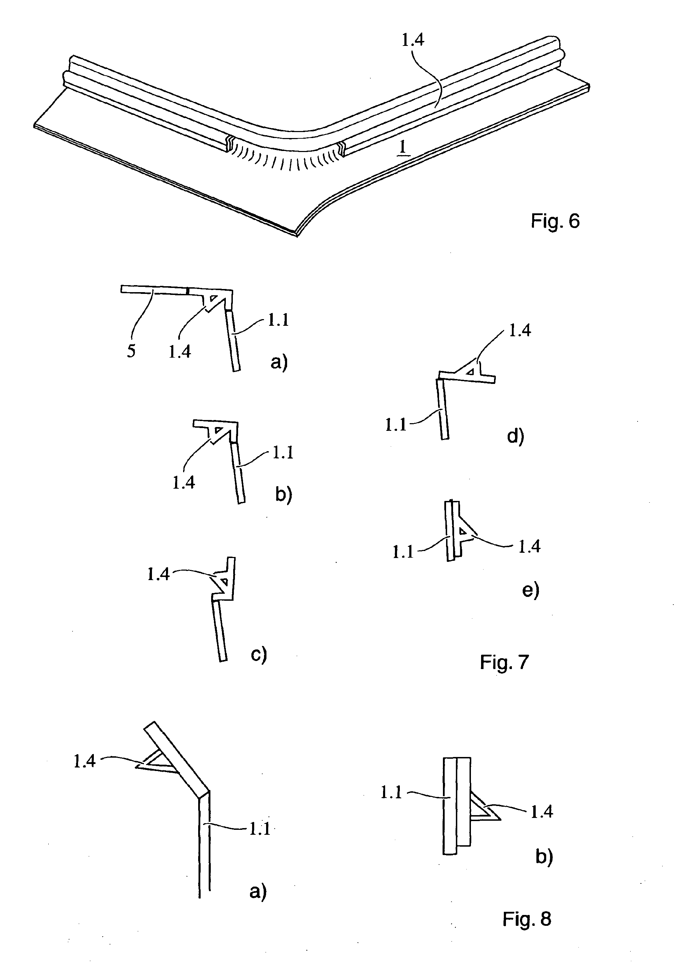

**Figuren 5** **und** **6** zeigen den Dachhimmel gemäß Figur 4 nachdem der Umbugbereich umgebugt worden ist. Desweiteren ist in Figur 5 zu erkennen, dass die Wulst 1.4 nur abschnittsweise vorgesehen ist, während sie bei der Ausführungsform gemäß Figur 6 zumindest entlang der geraden Bereiche gegebenenfalls sogar umlaufend gestaltet ist. Pro Abschnitt der Wulst 1.4 ist vorzugsweise eine separate Ausnehmung 4.1 vorgesehen.

**Figur 7** zeigt ein Herstellungsverfahren des Dachhimmels 1. In dem vorliegenden Fall wird der Dachhimmel gemeinsam mit der Wulst in einem Werkzeug hergestellt. Vorzugsweise ist die Wulst und/oder der Umbug nur abschnittsweise vorgesehen. Wie Figur a zu entnehmen ist, wird die Wulst 1.4 und/oder der Umbug zunächst abgeknickt zu der Ausformung 1.1 hergestellt. Dadurch ist eine leichtere Ausformung des Bauteils möglich, lediglich eine geringe Kaminhöhe nötig und die Abstützung erfolgt in einem günstigeren Winkel sowie hinterschnittfrei. Nachfolgend wird das Bauteil, wie in Figur b dargestellt, vorzugsweise beschnitten und dann ein Umbugschieber hochgefahren, der den Wulstbereich 1.4 um 90° im Uhrzeigersinn dreht, was in Figur c dargestellt ist. Anschließend wird der Umbugschieber nach vorne gefahren und dreht die Fläche mit der Wulst 1.4 wiederrum um 90° im Uhrzeigersinn. Danach wird der Bereich 1.4 an den Ausformung 1.1 angelegt vorzugsweise angepresst. Nach dem Anpressvorgang ist der Stützwinkel der Wulst deutlich günstiger. Aufgrund des geringeren Umbugwinkels ist der Umbugradius verbessert.

**Figur 8** zeigt eine weitere Ausführungsform des Herstellungsverfahrens des Dachhimmels 1. In dem vorliegenden Fall wird der Dachhimmel gemeinsam mit der Wulst in einem Werkzeug hergestellt. Vorzugsweise ist die Wulst und/oder der Umbug nur abschnittsweise vorgesehen. Wie Figur a zu entnehmen ist, wird die Wulst 1.4 und/oder der Umbug zunächst abgewinkel zu der Ausformung 1.1 hergestellt. Nachfolgend wird der Umbug vorzugsweise beschnitten und dann mit einem oder mehreren Umbugschiebern wie in Figur 1 b dargestellt hier im Uhrzeigersinn gedreht und an die Ausformung 1.1 angelegt, vorzugsweise angepresst.

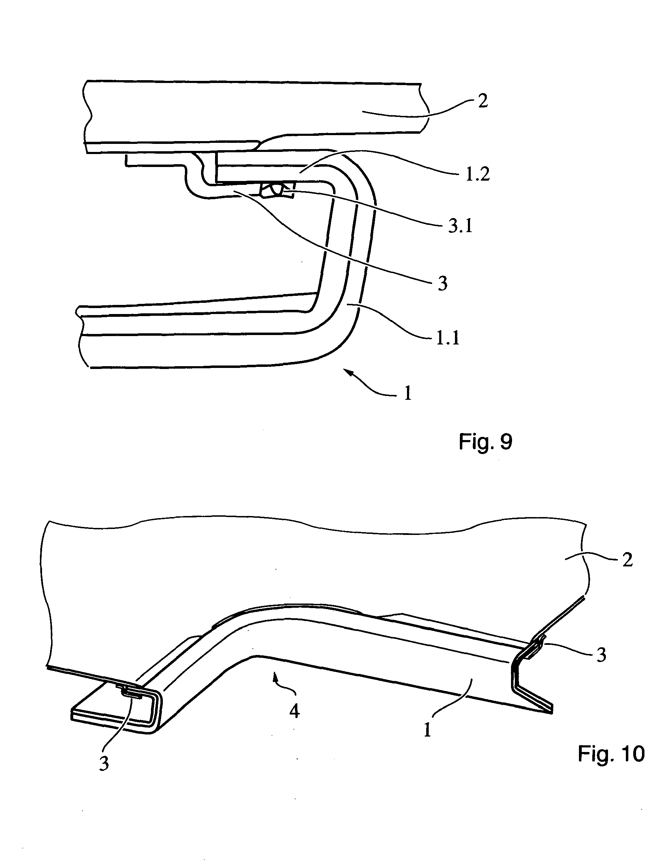

**Figuren 9 und 10** zeigen ein System bestehend aus einem Dachhimmel 1 und einer Kassette 2, insbesondere einer Schiebedachkassette. Der Dachimmel besteht vorzugsweise aus einem Trägermaterial und einem Dekormaterial, das dem Fahrgastinnenraum zugewandt ist. Der Dachhimmel 1 weist im Bereich einer Öffnung, die beispielsweise für ein Schiebedach oder ein Panoramadach vorgesehen wird, eine erste höher gezogene Ausformung 1.1 auf, an der sich ein Umbug 1.2 anschließt. Sowohl die Ausformung 1.1 als auch der Umbug 1.2 sind in dem vorliegenden Fall umlaufend um die Ausnehmung vorgesehen. An der Kassette 2 des Systems ist vorzugsweise einstückig eine Auflage 3 so vorgesehen, dass zwischen der Unterseite der Kassette 1 und der Oberseite der Auflage 3 ein Schlitz entsteht, in den der Umbug 1.2 bei der Montage des Dachhimmels an der Kassette eingefügt wird. Vorzugsweise ist der Schlitz so dimensioniert, dass er, zumindest abschnittsweise, den Umbug 1.2 klemmt. Dafür kann die Auflage 3 z. B. ein Form- und/oder Kraftschlussmittel aufweisen, das mit dem Dachhimmel zusammenwirkt. Alternativ oder zusätzlich kann die Auflage 3 in Richtung des Umbugs elastisch vorgespannt sein, indem beispielsweise die Breite des Schlitzes zumindest teilweise kleiner ist als die Dicke des Umbugs 1.2. Die Auflage 3 kann um die gesamte Kassette umlaufend oder nur abschnittsweise vorgesehen sein. Vorzugsweise ist die Auflage jeweils auf gegenüberliegenden Seiten einer beispielsweise quadratisch oder rechteckig geformten Kassette angeordnet.

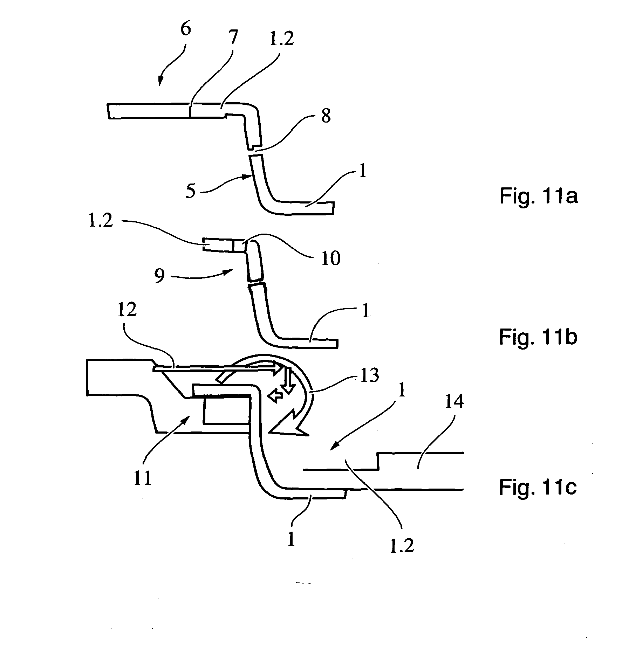

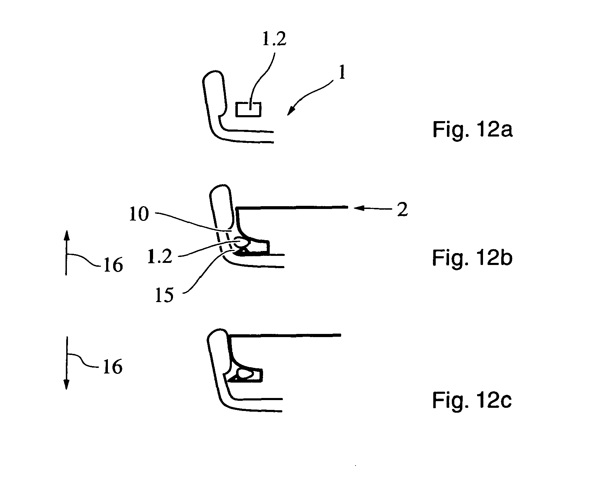

**Figuren 11** **a - c** zeigen die Herstellung eines Umbugs. Zunächst wird, wie in Figur 11a dargestellt, der Randbereich der Ausnehmung in dem Dachhimmel 1 geformt. Dieses Formen erfolgt vorzugsweise unter Druck- und/oder Temperatureinfluss. Sodann wird, wie ebenfalls dargestellt, der Dachhimmel entlang der Schnittkante 7 umlaufend beschnitten, wobei Abfall 6 entsteht. Gleichzeitig oder danach wird in den Umbug 1.2 die Ausnehmung 10, beispielsweise durch Wasserstrahlbeschnitt oder Stanzen, eingebracht. Außerdem wird hier in den Dachhimmel 1 vorzugsweise eine Kerbe eingefügt, entlang derer der Umbug 1.2, wie in Figur 11 c dargestellt, umgebogen werden kann. Dafür wird das Umbugwerkzeug 11, wie durch die Pfeile 12 dargestellt, bewegt. Diese Bewegung resultiert in einer im Wesentlichen kreisförmigen Bewegung des Umbugs 1.2 hier um die Kerbe 8, wie durch den Pfeil 13 dargestellt. Der Fachmann versteht, dass die Kerbe auch erst während des Biegens in den Dachhimmel eingeformt werden kann. Beispielsweise kann das Umbugwerkzeug eine, vorzugsweise beheizte, Nase aufweisen. Dies gilt für alle Beispiele der vorliegenden Erfindung. Gegebenenfalls kann noch ein Niederhalter 14 eingesetzt werden, um den Umbug zu unterstützen. Das in den Figuren 11a - c dargestellte Verformen des Dachhimmels erfolgt vorzugsweise zumindest teilweise plastisch, so dass der Umbug nach dem Entfernen der Werkzeuge in der in Figur 12a dargestellten Stellung verbleibt.

In den **Figuren 12** **a - c** ist die Verbindung zwischen dem Dachhimmel 1 und der Dachkassette 2 dargestellt. Für diese Verbindung wird der Dachhimmel von unten in die Dachkassette soweit eingeführt, bis sich der Umbug 1.2 zumindest teilweise oberhalb des Schlitzes in der Dachkassette 2 oder oberhalb der Auflage 3 befindet, was in Figur 12b durch den Pfeil 16 symbolisiert ist. Sodann wird der Dachhimmel in die entgegengesetzte Richtung, wie in Figur 12c durch Pfeil 16 dargestellt, bewegt. Dabei wird der vordere Abschnitt des Umbugs 1.2 in den Schlitz soweit eingeschoben, bis die Ausnehmung 10 des Umbugs mit einem Rastmittel 15, das an der Auflage 3 der Kassette vorgesehen ist, rastend zusammenwirkt.

### Bezugszeichenliste:

- 1: Dachhimmel
- 1.1: erste höher gezogene Ausformung
- 1.2: Umbug, Umbugbereich, Befestigungsflansch
- 1.3: Ausnehmung
- 1.4: Form-/Kraftschlussmittel, Ausformung, Rastmittel, Wulst
- 1.5: Trägermaterial
- 1.6: Dekormaterial
- 2: Ausnehmung
- 3: Befestigungsmittel, Auflage, Auflagelasche
- 3.1: Form- und/oder Kraftschlussmittel, Klemmittel
- 4: Kassette, Schiebedachkassette, Eckbereich
- 4.1: Ausnehmung
- 5: Beschnitt, Schiebedachausformung
- 6: Abfall nach Beschnitt
- 7: Schnittkante
- 8: Kerbe
- 9: Umbugbereich
- 10: Ausnehmung
- 11: Umbugwerkzeug
- 12: Bewegung des Werkzeugs
- 13: Bewegung des Umbugbereichs 9
- 14: Niederhalter
- 15: Formschlussmitttel, Rastnase
- 16: Montagebewegung

## Patentansprüche

1. Dachhimmel (1), der im Bereich eines Schiebedaches einen Rand aufweist, der umlaufend mit einer höher gezogenen Ausformung (1.1) und daran anschließend mit einem Umbug (1.2) versehen ist, **dadurch gekennzeichnet, dass** in dem Umbug (1.2) eine Ausnehmung (1.3) oder ein Form- und/oder Kraftschlussmittel (1.4) vorgesehen ist.

2. Dachhimmel nach Patentanspruch 1, **dadurch gekennzeichnet, dass** er mit einer Schiebedachkassette (4), die mindestens eine Ausnehmung (4.1) aufweist, an der Karosserie eines Fahrzeuges angebracht ist.

3. Dachhimmel nach Anspruch 2, **dadurch gekennzeichnet, dass** durch die Ausnehmung (1.3) in dem Dachhimmel und durch die Ausnehmung (4.1) in der Schiebedachkassette (4) ein Befestigungsmittel gesteckt wird, das den Dachhimmel und die Schiebedachkassette, vorzugsweise lösbar, miteinander verbindet.

4. Dachhimmel nach Anspruch 2, **dadurch gekennzeichnet, dass** der Umbug eine Formschlussmittel (1.4), insbesondere einstückig, aufweist, das mit der Ausnehmung (4.1) in der Schiebedachkassette (4) zusammenwirkt.

5. Dachhimmel nach Anspruch 4, **dadurch gekennzeichnet, dass** das Formschlussmittel (1.4) rastend mit der Ausnehmung (4.1) zusammenwirkt.

6. Dachhimmel nach einem der Ansprüche 4 oder 5, **dadurch gekennzeichnet, dass** das Formschlussmittel (1.4) eine Ausformung ist, die vorzugsweise in den Dachhimmel eingeformt ist.

7. Dachhimmel nach einem der voranstehenden Ansprüche oder nach dem Oberbegriff von Patentanspruch 1, **dadurch gekennzeichnet**, er eine Kassette aufweist, die zumindest abschnittsweise eine Auflage, insbesondere eine Auflagelasche, aufweist, auf der der Umbug des Dachhimmels aufliegt, wobei die Auflage mit der Kassette einen Schlitz bildet, der den Umbug des Dachhimmels zumindest abschnittsweise aufnimmt.

8. Dachhimmel nach Anspruch 7, **dadurch gekennzeichnet, dass** die Auflage (3) und die Kassette (2) einstückig vorgesehen sind.

9. Verfahren zur Herstellung eines Dachhimmels, bei dem im Bereich des Randes einer Ausnehmung des Dachhimmels umlaufend eine höher gezogene Ausformung (1.1) und daran anschließend ein Umbug (1.2) durch Umformen vorgesehen wird, **dadurch gekennzeichnet, dass** in den Umbug ein Form- und/oder Kraftschlussmittel (1.4) eingeformt wird.

10. Verfahren nach Anspruch 7, **dadurch gekennzeichnet, dass** das Form- und/oder Kraftschlussmittel (1.4) eingeformt wird bevor der Umbug in seine abschließende Lage gebracht wird.

11. Verfahren nach Anspruch 7 oder 8, **dadurch gekennzeichnet, dass** das Form- und/oder Kraftschlussmittel (1.4) nur abschnittsweise vorgesehen wird.

12. Verfahren nach einem der Ansprüche 9-11 oder dem Oberbegriff von Patentanspruch 9, **dadurch gekennzeichnet, dass** in den Umbug (1.2) eine oder mehrere Ausnehmung(en) (10) eingearbeitet wird/werden.

13. Verfahren nach Patentanspruch 13, **dadurch gekennzeichnet, dass** die Ausnehmung (10) in den Umbug (1.2) eingearbeitet wird, bevor der Umbug in seine abschließende Lage gebracht wird.

14. Verfahren zur Befestigung eines Dachhimmels gemäß einem der Ansprüche 4 - 6 an einer Kassette, insbesondere einer Schiebedachkassette (4), **dadurch gekennzeichnet, dass** der Umbug (1.2) zumindest teilweise in die Schiebedachkassette (4) einführt wird und dass das Form- und/oder Kraftschlussmittel (1.4) dabei in eine Ausnehmung (4.1) der Kassette einrastet.

15. Verfahren nach Anspruch 14 oder nach dem Oberbegriff von Patentanspruch 14, **dadurch gekennzeichnet, dass** der Umbug (1.2) zumindest teilweise in die Schiebedachkassette (4) einführt wird und dabei der Umbug in den Schlitz zwischen Kassette und Auflage eindringt.
